# EUROPÄISCHE PATENTSCHRIFT

(11) **EP 3 513 996 B1**
(45) Veröffentlichungstag und Bekanntmachung des Hinweises auf die Patenterteilung: **08.02.2023**
(21) Anmeldenummer: 18210422.4
(22) Anmeldetag: 05.12.2018
(51) Int. Cl.: B60K 17/10, B60K 7/00, B60K 23/04, F16H 47/04

(54) **FAHRZEUG, INSBESONDERE LANDWIRTSCHAFTLICHES FAHRZEUG**
VEHICLE, IN PARTICULAR AGRICULTURAL VEHICLE
VÉHICULE, EN PARTICULIER VÉHICULE AGRICOLE

(30) Priorität: 18.01.2018 DE 102018101093
(43) Veröffentlichungstag der Anmeldung: 24.07.2019
(73) Patentinhaber: CLAAS Industrietechnik GmbH, 33106 Paderborn (DE)
(72) Erfinder: Gohde, Thomas, 33181 Bad Wünnenberg (DE); Wieckhorst, Jan Carsten, 33104 Paderborn (DE); Obermeier-Hartmann, Robert, 33014 Bad Driburg (Pömbsen) (DE); Ramm, Marco, 33104 Paderborn (DE)
(74) Vertreter: Budach, Steffen

(56) Entgegenhaltungen:
- EP-A2- 2 995 533
- DE-A1- 1 816 183
- DE-A1- 10 319 252

## Beschreibung

Die Erfindung betrifft ein Fahrzeug, insbesondere landwirtschaftliches Fahrzeug, gemäß dem Oberbegriff von Anspruch 1.

Landwirtschaftliche Fahrzeuge sind aus dem Stand der Technik in unterschiedlichen Ausgestaltungen bekannt. Dies können beispielsweise Traktoren oder Erntemaschinen wie Feldhäcksler oder Mähdrescher sein.

Beispielsweise ist in der WO 2014/096451 A1 ein landwirtschaftliches Fahrzeug beschrieben, bei welchem Räder von einem Hauptantrieb über einen verzweigten Antriebsstrang mit einem mechanischen Zweig und mit einem hydromechanischen Zweig angetrieben werden. Bei diesem wirkt der mechanische Zweig in einem rein mechanischen Antriebsstrang auf die Fahrwerksräder und in dem hydro-mechanischen Zweig über eine Hydropumpe und einen ersten Hydromotor und einen zweiten Hydromotor auf die Vorder- sowie auf die Hinterachse. Dabei werden die sich gegenüberliegenden Räder der Vorderachse und die sich gegenüberliegenden Räder der Hinterachse gleichmäßig angetrieben.

Bei diesem landwirtschaftlichen Fahrzeug wird durch die Kombination des hydraulischen Zweiges mit dem mechanischen Zweig ein kontinuierliches Getriebe (ein sogenanntes CVT, eine Continuously Variable Transmission) geschaffen.

Insbesondere beim Einsatz von landwirtschaftlichen Fahrzeugen auf Feldern hat sich herausgestellt, dass diese mit nur einer gelenkten Achse einen nicht unerheblich großen Wendekreis aufweisen. Bei der Feldbearbeitung und hier insbesondere bei der Wende im Vorgewende ist ein möglichst geringer Wendekreis jedoch von erheblichem Vorteil.

Ein weiteres landwirtschaftliches Fahrzeug ist aus der EP 2 995 533 A2 bekannt.

Der vorliegenden Erfindung liegt das Problem zugrunde, das bekannte Fahrzeug derart auszugestalten und weiterzubilden, dass dessen Wendigkeit erhöht wird.

Das genannte Problem wird bei einem Fahrzeug gemäß dem Oberbegriff von Anspruch 1 durch die Merkmale des kennzeichnenden Teils von Anspruch 1 gelöst.

Das vorschlagsgemäße Fahrzeug, insbesondere ein landwirtschaftliches Fahrzeug, bspw. ein Raupenfahrzeug, weist einen Hauptantrieb und ein Fahrwerk auf, welches bezogen auf die Fahrzeuglängsachse mindestens zwei gegenüberliegende Fahrwerksräder aufweist. Diese sind über ein Differentialgetriebe miteinander verbunden.

Die Fahrwerksräder sind vom Hauptantrieb über einen verzweigten Antriebsstrang mit einem mechanischen Zweig und mit einem hydro-mechanischen Zweig antreibbar, wobei die gegenüberliegenden Fahrwerksräder über den mechanischen Zweig über das Differentialgetriebe antreibbar sind. Der hydro-mechanische Zweig weist eine hydrostatische Anordnung mit einer ersten hydrostatischen Einheit auf, wobei mit der hydrostatischen Anordnung eine zweite hydrostatische Einheit und eine dritte hydrostatische Einheit des hydromechanischen Zweigs mit Leistung versorgbar ist.

Die Grundidee der vorliegenden Erfindung ist es, dass mittels der zweiten hydrostatischen Einheit eines der Fahrwerksräder am Differentialgetriebe vorbei antreibbar ist und dass mittels der dritten hydrostatischen Einheit das gegenüberliegende Fahrwerksrad am Differentialgetriebe vorbei antreibbar ist.

Hierdurch können die von der zweiten und der dritten hydrostatischen Einheit angetriebenen Fahrwerksräder mit unterschiedlicher Leistung versorgt werden. Durch die unterschiedliche Leistungsversorgung kann das Lenken während einer Kurvenfahrt sowohl unterstützt oder auch allein hierdurch ermöglicht werden. Aufgrund des unterschiedlich starken Antreibens der gegenüberliegenden Fahrwerksräder wird ein besonders geringer Kurvenradius ermöglicht. Es ergibt sich insgesamt eine größere Wendigkeit für das Fahrzeug.

Gemäß der Weiterbildung nach Anspruch 2 können die hydrostatischen Einheiten Axialkolbenmaschinen sein. Durch die Verwendung von Axialkolbenmaschinen wird eine ganz besonders einfache und verlustarme Leistungsversorgung der Fahrwerksräder und eine einfache Regelung des hydromechanischen Zweigs ermöglicht.

Bei den sich gegenüberliegenden, von der zweiten und der dritten hydrostatischen Einheit am Differentialgetriebe vorbei antreibbaren Fahrwerksrädern handelt es sich hier und vorzugsweise um Fahrwerksräder einer hinteren Achse des Fahrzeugs (Anspruch 3). Dies ist insbesondere bei Raupenfahrzeugen bzw. Halbraupenfahrzeugen von besonderem Vorteil.

Die bevorzugte Weiterbildung des Anspruchs 4 erlaubt insbesondere in dem ersten Betriebsbereich eine besonders große Wendigkeit in diesem ersten Betriebsbereich.

Zur Geradeausfahrt wird gemäß der Weiterbildung nach Anspruch 5, insbesondere im ersten Betriebsbereich, die von der hydrostatischen Anordnung, insbesondere der ersten hydrostatischen Einheit, bereitgestellte Leistung gleichmäßig zwischen der zweiten und der dritten hydrostatischen Einheit aufgeteilt.

Ferner kann das Fahrzeug gemäß Anspruch 6 eine Steuerung aufweisen, welche zumindest im ersten Betriebsbereich in Abhängigkeit von einer einzustellenden Fahrtrichtung das Verhältnis der Leistungsversorgung zwischen der zweiten und der dritten hydrostatischen Einheit steuert. Dies kann insbesondere durch ein unterschiedlich starkes Verschwenken der ersten und/oder zweiten Axialkolbenmaschine erfolgen.

Ferner kann gemäß Anspruch 7 ein weiterer Betriebsbereich vorgesehen sein, welcher oberhalb des ersten Betriebsbereichs angeordnet ist, in welchem über den bzw. einen weiteren mechanischen Zweig die gegenüberliegenden Fahrwerksräder über das Differentialgetriebe angetrieben werden, wobei über einen weiteren hydro-mechanischen Zweig die gegenüberliegenden Fahrwerksräder über das Differentialgetriebe angetrieben werden. In diesem Fall treibt eine der hydrostatischen Einheiten beide Fahrwerksräder an. Da eine besonders große Wendigkeit in der Regel vor allem bei niedrigen Geschwindigkeiten benötigt wird, kann daher bei höheren Geschwindigkeiten die Leistungsübertragung auf die Fahrwerksräder auch direkt auf das Differenzialgetriebe erfolgen. Durch diese Änderung gegenüber dem ersten Betriebsbereich kann im weiteren Betriebsbereich ein höherer Wirkungsgrad erreicht werden.

Dieser weitere Betriebsbereich kann gemäß Anspruch 8 ein zweiter und/oder ein dritter Betriebsbereich sein. Bevorzugte weitere Ausgestaltungen des zweiten bzw. dritten Betriebsbereichs sind im Anspruch 9 beschrieben.

Ein bevorzugter hydro-mechanischer Betriebsbereich des Fahrzeugs ist in den Ansprüchen 10 und 11 beschrieben.

Im Anspruch 12 ist eine bevorzugte Ausgestaltung der Planetengetriebeanordnung im Antriebsstrang des Fahrzeugs beschrieben. Im Anspruch 13 ist eine Drehrichtungsänderungsvorrichtung definiert. Im Folgenden wird die Erfindung anhand einer lediglich ein Ausführungsbeispiel darstellenden Zeichnung näher erläutert. In der Zeichnung zeigt
- Fig. 1: eine sehr schematische Darstellung eines vorschlagsgemäßen Fahrzeugs a) in einer Seitenansicht und b) in einer Aufsicht,
- Fig. 2: eine schematische Ansicht des Antriebsstrangs des Fahrzeugs aus Fig. 1 und
- Fig. 3: eine schematische Darstellung der im hydraulischen Zweig übertragenen Leistung im Verhältnis zur gesamten Leistung über die Geschwindigkeit in verschiedenen Betriebsbereichen.

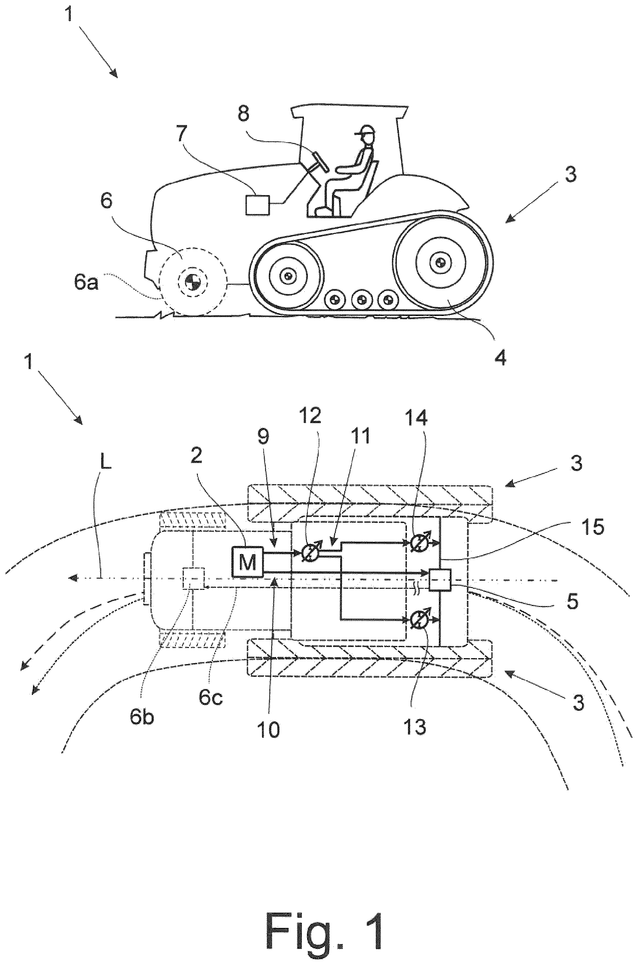

Fig. 1 zeigt ein vorschlagsgemäßes Fahrzeug 1, vorzugsweise landwirtschaftliches Fahrzeug 1. Das Fahrzeug 1 weist einen Hauptantrieb 2 und ein Fahrwerk 3 auf. Der Hauptantrieb 2 ist hier und vorzugsweise ein Verbrennungsmotor. Bezogen auf eine Fahrzeuglängsachse L weist das Fahrwerk 3 mindestens zwei gegenüberliegende Fahrwerksräder 4 auf. Die Fahrwerksräder 4 sind über ein Differentialgetriebe 5 miteinander verbunden. Die Fahrwerksräder 4 können sowohl Räder mit einem Reifen als auch Antriebsräder eines Kettenlaufwerks sein. Es können weitere Räder 6 vorgesehen sein.

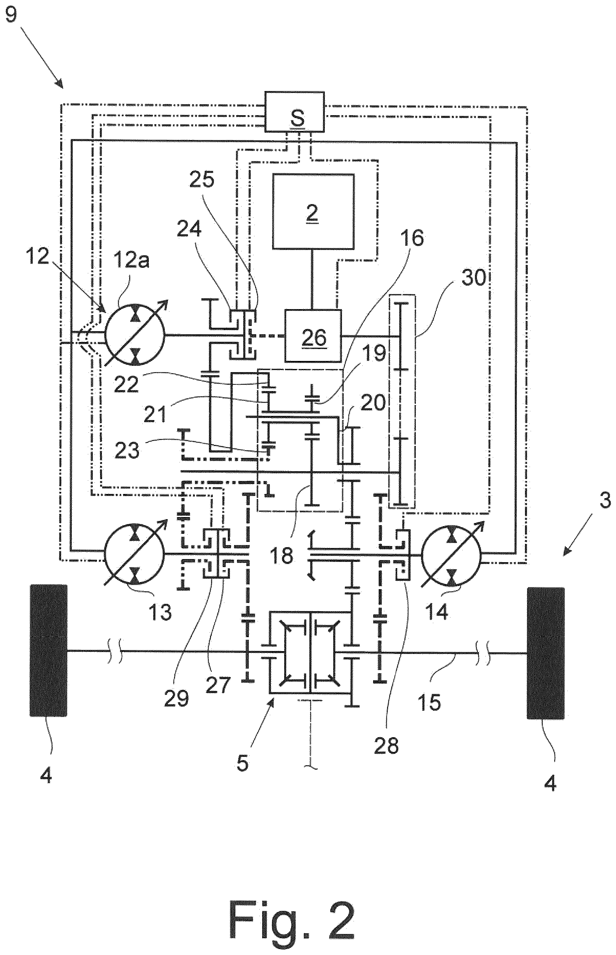

Entsprechend kann es sich bei dem Fahrzeug 1 um ein Radfahrzeug und/oder ein Raupenfahrzeug, insbesondere Vollraupenfahrzeug, handeln. Vorzugsweise kann das Fahrzeug 1, wie in der Fig. 2 gezeigt, ein Halbraupenfahrzeug sein. Ein Halbraupenfahrzeug weist zusätzlich zur Raupe Räder 6 mit Reifen 6a auf. Diese Räder 6 sind hier mittels einer Lenkeinrichtung 7 lenkbar, das heißt, dass ihr Winkel zur Längsachse L des Fahrzeugs 1 verstellbar ist, insbesondere mittels eines Lenkrades 8 und/oder durch eine Steuerung S. Ist das Fahrzeug 1 als Radfahrzeug ausgebildet, ist vorzugsweise ebenfalls eine Lenkeinrichtung 7 vorgesehen, mittels der Räder 6 des Fahrzeugs 1 lenkbar sind. Die lenkbaren Räder 6 liegen sich vorzugsweise bezogen auf die Fahrzeuglängsachse L gegenüber. Sie sind hier und vorzugsweise über ein weiteres Differenzialgetriebe 6b miteinander verbunden.

Der Antriebsstrang 9 weist einen mechanischen Zweig 10 und einen hydromechanischen Zweig 11 auf. Die Fahrwerksräder 4 sind vom Hauptantrieb 2 über den Antriebsstrang 9 mit einem mechanischen Zweig 10 und mit einem hydro-mechanischen Zweig 11 antreibbar. Durch die Verzweigung des Antriebsstrangs 9 kann hier und vorzugsweise über den Verstellbereich des Antriebsstrangs 9 ein kontinuierliches Getriebe bereitgestellt werden. Der mechanische Zweig 10 ist hier rein mechanisch und/oder hydrauliklos ausgebildet. Jedenfalls ist im mechanischen Zweig 10 hier keine Leistungsübertragung vom Hauptantrieb 2 auf die Fahrwerksräder 4 über eine Hydraulik vorgesehen. Über zumindest den mechanischen Zweig 10 sind die Fahrwerksräder 4 hier über das Differentialgetriebe 5 antreibbar.

Der hydro-mechanische Zweig 11 weist eine hydrostatische Anordnung 12 mit einer ersten hydrostatischen Einheit 12a, eine zweite hydrostatische Einheit 13 und eine dritte hydrostatische Einheit 14 auf. Die hydrostatische Anordnung 12 ermöglicht die Versorgung der zweiten und der dritten hydrostatischen Einheit 13, 14 des hydro-mechanischen Zweigs mit Leistung. Hierzu sind die hydrostatische Anordnung 12 und die zweite hydrostatische Einheit 13 und die dritte hydrostatische Einheit 14 hydraulisch miteinander verbunden.

Dies kann auf unterschiedliche Arten erfolgen. Im Ausführungsbeispiel der Fig. 2 führen hier und vorzugsweise von der ersten hydrostatische Einheit 12a der hydrostatischen Anordnung 12 zwei verzweigte Hydraulikleitungen mit je einem Zweig zur zweiten hydrostatischen Einheit 13 und mit je einem Zweig zur dritten hydrostatischen Einheit 14.

In einem alternativen, nicht gezeigten, Ausführungsbeispiel kann die hydrostatische Anordnung 12 zusätzlich zur ersten hydrostatischen Einheit 12a noch eine weitere hydrostatische Einheit aufweisen. Dann ist vorzugsweise mit der ersten hydrostatischen Einheit 12a der hydrostatischen Anordnung 12 die zweite hydrostatische Einheit 13 mit Leistung versorgbar und/oder mit der weiteren hydrostatischen Einheit der hydrostatischen Anordnung 12 die dritte hydrostatische Einheit 14 mit Leistung versorgbar.

Im Ausführungsbeispiel und vorzugsweise ist die erste hydrostatische Einheit 12a eine, insbesondere erste, Axialkolbenmaschine und/oder ist die zweite hydrostatische Einheit 13 eine, insbesondere zweite, Axialkolbenmaschine und/oder ist die dritte hydrostatische Einheit 14 eine, insbesondere dritte, Axialkolbenmaschinen. Die nicht gezeigte weitere hydrostatische Einheit kann zusätzlich oder alternativ eine Axialkolbenmaschine sein. Bei Axialkolbenmaschinen lässt sich, insbesondere durch deren Verschwenken, die Fördermenge an Hydraulikflüssigkeit, welche pro Umdrehung gefördert wird, bzw., mit welcher pro Umdrehung die Axialkolbenmaschine angetrieben wird, kontinuierlich einstellen. Daher ermöglichen diese eine besonders genaue Leistungssteuerung im hydro-mechanischen Zweig 11 des Antriebsstrangs 9 bei einem vergleichsweise hohen Wirkungsgrad des hydraulischen Systems. Hier und vorzugsweise können die hydrostatischen Einheiten 12a, 13, 14 jeweils je nach Betriebsbereich des Fahrzeugs 1 als Pumpe oder als Motor betrieben werden.

Der Grundgedanke der Erfindung ist, dass mittels der zweiten hydrostatischen Einheit 13 eines der Fahrwerksräder 4 am Differentialgetriebe 5 vorbei antreibbar ist und dass mittels der dritten hydrostatischen Einheit 14 das gegenüberliegende Fahrwerksrad 4 am Differentialgetriebe 5 vorbei antreibbar ist. Hierdurch können unterschiedliche Leistungen auf die gegenüberliegenden Fahrwerksräder 4 übertragen werden. Entsprechend wird eine Kurvenfahrt durch die unterschiedliche Leistungsübertragung ermöglicht, und/oder, insbesondere wenn wie im Ausführungsbeipsiel gezeigt, lenkbare Räder 6 vorgesehen sind, unterstützt. Die Wendigkeit des Fahrzeugs 1 nimmt zu. Es können, besonders auf unbefestigtem Untergrund, kleinere Wendekreise gefahren werden, als wenn die Fahrwerksräder 4 nur über ein Differenzialgetriebe 5 angetrieben werden.

Wie der Aufsicht auf das vorschlagsgemäße Fahrzeug 1 in der Fig. 1a entnommen werden kann, handelt es sich hier und vorzugsweise bei den gegenüberliegenden, von der zweiten und dritten hydrostatischen Einheit 13, 14 am Differentialgetriebe 5 vorbei antreibbaren Fahrwerksrädern 4, um die Fahrwerksräder 4 einer hinteren Achse 15 des Fahrzeugs 1, insbesondere der hintersten Fahrwerksräderachse des Fahrzeugs 1. Vom Differenzialgetriebe 5 kann die auf dieses übertragene Leistung, zumindest teilweise, insbesondere mittels einer Welle 6c, auf das weitere Differenzialgetriebe 6b übertragen werden.

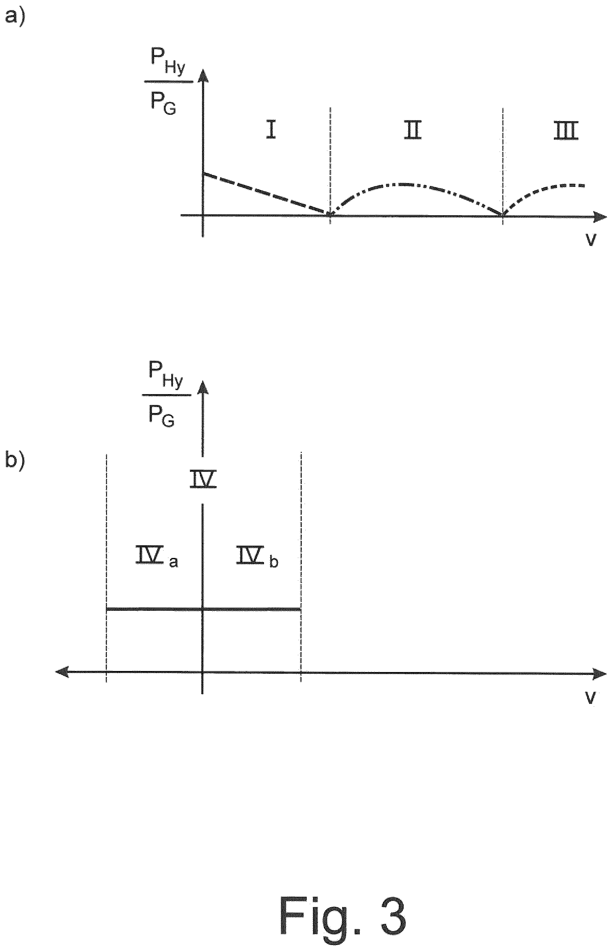

Bevor anhand der Fig. 2 und 3 verschiedene Betriebsbereiche des Fahrzeugs 1 beschrieben werden, soll anhand der Fig. 2 zunächst beispielhaft der Aufbau eines verzweigten Antriebsstrangs 9 des Ausführungsbeispiels eines vorschlagsgemäßen Fahrzeugs 1 beschrieben werden.

Die verschiedenen Betriebsbereiche des Fahrzeugs 1 sind hier durch die Verwendung verschiedener Zweige 10, 11 des Antriebsstrangs 9 definiert, über welche Leistung vom Hauptantrieb 2 zu den Fahrwerksrädern 4 übertragen wird.

Wie in der Fig. 2 gezeigt, weist das Fahrzeug 1 einen Hauptmotor 2 auf, welcher hier und vorzugsweise ein Verbrennungsmotor ist. Von diesem ist dessen Antriebsleistung mittels des verzweigten Antriebsstrangs 9 auf zwei gegenüberliegende Fahrwerksräder 4 übertragbar. Im Ausführungsbeispiel weist der Antriebsstrang 9 einen mechanischen Zweig 10 und mehrere hydro-mechanische Antriebszweige 11 auf. Diese unterscheiden sich hier und vorzugsweise je nach Betriebsbereich voneinander. Gemeinsam ist hier und vorzugsweise allen hydro-mechanischen Antriebszweigen, dass diese über die erste hydrostatische Einheit 12 und zumindest die zweite hydrostatische Einheit 13 verlaufen. In alternativen Ausführungsbeispielen können auch mehrere mechanische Zweige, insbesondere für verschiedene Betriebsbereiche, vorgesehen sein.

Der Antriebsstrang 9 weist eine Planetengetriebeanordnung 16 auf. Die Planetengetriebeanordnung 16 dient hier dem Verzweigen des mechanischen Zweigs 10 und des hydro-mechanischen Zweigs 11 in mindestens einem Betriebsbereich des Fahrzeugs 1. Vorzugsweise dient die Planetengetriebeanordnung in allen Betriebsbereichen, in denen sowohl über einen mechanischen Zweig 10 als auch über einen hydro-mechanischen Zweig 11 Leistung vom Hauptantrieb 2 auf die Fahrwerksräder 4 übertragen wird, dem Verzweigen und/oder Zusammenführen der Zweige des Antriebsstrangs 9. Zusätzlich oder alternativ können auch ein bzw. der mechanische Zweig 10 und einer der bzw. der hydro-mechanische Zweig 11 in der Planetengetriebeanordnung 16 zusammengeführt werden. Dies ist vorzugsweise in einem zweiten und/oder dritten Betriebsbereich des Fahrzeugs 1 der Fall, welche weiter unten näher erläutert werden.

Die Planetengetriebeanordnung 16 kann ein oder mehrere Planetengetriebestufen aufweisen. Im vorliegenden Fall weist die Planetengetriebeanordnung 16 vorzugsweise ein Planetengetriebe 17 auf. Die Planetengetriebeanordnung 16 weist im Ausführungsbeispiel ein erstes Sonnenrad 18 auf, von welchem Planetenräder 19 angetrieben werden. Die Planetenräder 19 werden von einem Planetenradträger 20 getragen. Im Ausführungsbeispiel ist das erste Sonnenrad 19 der Eingang des mechanischen Zweigs 10 vom Hauptantrieb 2 in die Planetengetriebeanordnung 16. Der Ausgang des mechanischen Zweigs 10 wird durch den Planetenradträger 20 gebildet. Hier und vorzugsweise sind auf dem Planetenradträger 20 weitere Planetenräder 21 vorgesehen, welche koaxial und axial versetzt zu den Planetenrädern 19 angeordnet sind und drehfest mit diesen verbunden sind. Vorzugsweise sind die Planetenräder 19, 21 einstückig ausgebildet, insbesondere aus einem Stück gefertigt. Die koaxial und axial versetzt zueinander angeordneten Planetenräder 19 und weiteren Planetenräder 21 weisen unterschiedliche Zähnezahlen auf. Durch die Planetenräder 19, 21 kann so eine weitere Übersetzung innerhalb des Planetengetriebes 17 bereitgestellt werden. Die weiteren Planetenräder 21 wirken mit dem Hohlrad 22 des Planetengetriebes 17 der Planetengetriebeanordnung 16 zusammen. Zusätzlich oder alternativ können sie auch mit einem zweiten Sonnenrad 23, welches insbesondere einen Eingang eines hydro-mechanischen Zweigs in die Planetengetriebeanordnung 16 bilden kann, zusammenwirken.

In der schematischen Fig. 2 ist jeweils zur Veranschaulichung nur ein Planetenrad 19 bzw. 21 gezeigt.

Das Hohlrad 22 kann einen Ausgang der Planetengetriebeanordnung 16 für einen hydro-mechanischen Zweig aus der Planetengetriebeanordnung 16 bilden.

Hier und vorzugsweise ist das Hohlrad 22 mit der hydrostatischen Anordnung 12, insbesondere der ersten hydrostatischen Einheit 12a, gekoppelt bzw. koppelbar. Zwischen dem Hohlrad 22 und der hydrostatischen Anordnung 12, insbesondere der ersten hydrostatischen Einheit 12a, kann eine Kupplung 24 vorgesehen sein, welche die Kopplung der hydrostatischen Anordnung 12, insbesondere der ersten hydrostatischen Einheit 12a, mit dem Hohlrad 22 löst bzw. schließt. Bei dieser Kupplung 24 handelt es sich vorzugsweise um eine schaltbare Kupplung 24.

Darüber hinaus kann eine Kupplung 25 vorgesehen sein, mittels welcher die hydrostatischen Anordnung 12, insbesondere der ersten hydrostatischen Einheit 12a, mit dem Hauptantrieb 2 an der Planetengetriebeanordnung 16 vorbei koppelbar ist. Mit dieser Kupplung 25 kann diese Kopplung auch getrennt werden. Hier und vorzugsweise können die Kupplung 24 zur Kopplung der hydrostatischen Anordnung 12, insbesondere der ersten hydrostatischen Einheit 12a, mit der Planetengetriebeanordnung 16 und die Kupplung 25 zur Kopplung der hydrostatischen Anordnung 12, insbesondere der ersten hydrostatischen Einheit 12a, mit dem Hauptantrieb 2 an der Planetengetriebeanordnung 16 vorbei als Wechselkupplung ausgebildet sein, welche die hydrostatischen Anordnung 12, insbesondere der ersten hydrostatischen Einheit 12a, entweder mit der Planetengetriebeanordnung 16 oder mit dem Hauptantrieb 2 an der Planetengetriebeanordnung 16 vorbei koppelt und die jeweils andere Verbindung entkuppelt.

Darüber hinaus kann der Antriebsstrang 9 eine Drehrichtungsänderungsvorrichtung 26, beispielsweise in der Bauart eines Wendegetriebes, aufweisen. Diese weist hier und vorzugsweise einen Eingang und einen Ausgang auf. Bei einer nicht geänderten Eingangsdrehrichtung kann je nach Zustand der Drehrichtungsänderungsvorrichtung 26 an deren Ausgang bzw. deren Ausgängen eine erste Drehrichtung ausgegeben werden oder eine zweite, der ersten Drehrichtung entgegengesetzte Drehrichtung, ausgegeben werden.

Die Drehrichtungsänderungsvorrichtung 26 kann an die erste hydrostatische Einheit 12a und/oder an das Planetengetriebe 16 eine erste Drehrichtung oder eine zweite, der ersten Drehrichtung entgegengesetzte Drehrichtung, ausgeben.

Vorzugsweise ist die Drehrichtungsänderungsvorrichtung 26 im Antriebsstrang 9, insbesondere deren hydraulischem Zweig 14, zwischen vom Hauptmotor 2 zur Hydraulikpumpe 12 angeordnet. Zusätzlich oder alternativ kann die Drehrichtungsänderungsvorrichtung 26 oder eine weitere Drehrichtungsänderungsvorrichtung auch im mechanischen Zweig 13 des Antriebsstrangs 9 angeordnet sein, wie dies in der Fig. 2 gezeigt ist. Hier ist die Drehrichtungsänderungsvorrichtung 26 im mechanischen Zweig 14 zwischen dem Hauptantrieb 2 und der Planetengetriebeanordnung 16 angeordnet. Die Drehrichtungsänderungsvorrichtung 26 kann auch zum Verzweigen eines hydro-mechanischen Zweiges 11 vom mechanischen Zweig 10 dienen, insbesondere in einem weiteren Betriebsbereich, hier dem weiter unten beschriebenen dritten Betriebsbereich III.

Zusätzlich oder alternativ kann eine nicht gezeigte Drehrichtungsänderungsvorrichtung, beispielsweise in der Bauart eines Wendegetriebes, im Antriebsstrang 9 zwischen der Planetengetriebeanordnung 16 und dem Differenzialgetriebe 5 angeordnet sein. Mittels dieser kann die von der Planetengetriebeanordnung 16 an das Differenzialgetriebe 5 abgegebene Drehrichtung umgekehrt werden. In diesem Fall weist das Fahrzeug 1 hier und vorzugsweise zwei sich unterscheidende mechanische Zweige im Antriebsstrang 9 auf, welche vorzugsweise in unterschiedlichen Betriebsbereichen des Fahrzeugs 1 genutzt werden.

Hier und vorzugsweise kann ferner eine Kupplung 27 zwischen der zweiten hydrostatischen Einheit 13 und dem von dieser am Differentialgetriebe 5 vorbei antreibbaren Fahrwerksrad vorgesehen sein, mittels welcher Kupplung 27 die Leistungsübertragung von der zweiten hydrostatischen Einheit 13 am Differentialgetriebe 5 vorbei auf das von dieser antreibbare Fahrwerksrad unterbrochen werden kann.

Zusätzlich oder alternativ kann ferner eine Kupplung 28 zwischen der dritten hydrostatischen Einheit 14 und dem von dieser am Differentialgetriebe 5 vorbei antreibbaren Fahrwerksrad 4 vorgesehen sein, mittels welcher Kupplung 28 die Leistungsübertragung von der dritten hydrostatischen Einheit 14 am Differentialgetriebe 5 vorbei auf das von dieser antreibbare Fahrwerksrad 4 unterbrochen werden kann. Hier und vorzugsweise sind die zweite hydrostatische Einheit 13 und die dritte hydrostatische Einheit 14, insbesondere mit den Kupplungen 27, 28 zur weiteren Übertragung der Antriebsleistung auf die Fahrwerksräder 4 am Differenzialgetriebe 5 vorbei, sowie das Differenzialgetriebe 5 in einem Gehäuse angeordnet. Zusätzlich kann auch die Planetengetriebeanordnung 16 und ggf. die hydrostatische Anordnung 12 und/oder, insbesondere nur, die erste hydrostatische Einheit 12a mit in diesem Gehäuse angeordnet sein. Bevorzugt ist jedoch, dass die Planetengetriebeanordnung 16 und ggf. die hydrostatische Anordnung 12 und/oder, insbesondere nur, die erste hydrostatische Einheit12a in einem separaten Gehäuse angeordnet sind.

Ferner kann eine Kupplung 29 vorgesehen sein, mittels welcher die zweite hydrostatische Einheit 13 mit einem Eingang der Planetengetriebeanordnung 16 koppelbar bzw. von dieser trennbar ist. Der Eingang wird hier und vorzugsweise von dem zweiten Sonnenrad 23 gebildet.

Die Einstellung der Schaltzustände der Kupplungen 24, 25, 27, 28, 29 und/oder der Drehrichtungsänderungsvorrichtung 26 erfolgt hier und vorzugsweise durch die Steuerung S, insbesondere in Abhängigkeit vom Betriebsbereich.

Wie zuvor beschrieben, kann das Fahrzeug 1 mehrere Betriebsbereiche I, II, III, IV, IVₐ, IV_{b} aufweisen, in denen die Leistung vom Hauptmotor 2 zu den Fahrwerksrädern 4 über verschiedene Zweige des Antriebsstrangs 9 geleitet wird. Diese sollen nachfolgend näher beschrieben werden.

Im ersten Betriebsbereich I sind hier und vorzugsweise die Kupplungen 24, 25, 27, 28, 29 sowie die Drehrichtungsänderungsvorrichtung 26 wie folgt geschaltet. Die Kupplung 24 zwischen dem Hohlrad 22 und der ersten hydrostatischen Einheit 12a ist geschlossen. Die Kupplung 25 mittels welcher die erste hydrostatische Einheit 12a mit dem Hauptantrieb an der Planetengetriebeanordnung 16 vorbei koppelbar ist, ist geöffnet, so dass hier keine Leistungsübertragung möglich ist. Die Kupplungen 27, 28, welche die zweite hydrostatische Einheit 13 mit einem der Fahrwerksräder 4 bzw. die dritte hydrostatische Einheit 14 mit dem gegenüberliegenden Fahrwerksrad 4 koppeln, sind geschlossen. Die Kupplung 29, über welche die zweite hydrostatische Einheit 13 mit dem zweiten Sonnenrad 23 koppelbar ist, ist geöffnet. Die Drehrichtungsänderungsvorrichtung 26 überträgt die Drehung des Hauptantriebs 2 in eine erste Drehrichtung.

In dem ersten Betriebsbereich I arbeitet bzw. arbeiten hier und vorzugsweise die erste hydrostatische Einheit 12a der hydrostatischen Anordnung 12 und ggf. die weitere hydrostatische Einheit der hydrostatischen Anordnung 12 als Pumpe. Die zweite und die dritte hydrostatische Einheit 13, 14 arbeiten im ersten Betriebsbereich hier und vorzugsweise als Motor.

Im ersten Betriebsbereich I werden die gegenüberliegenden Fahrwerksräder 4 über den mechanischen Zweig 10 über das Differentialgetriebe 5 angetrieben, wobei zusätzlich mit der hydrostatischen Anordnung 12, hier der ersten hydrostatischen Einheit 12a, die zweite hydrostatische Einheit 13 und die dritte hydrostatische Einheit 14 des hydro-mechanischen Zweigs 11 mit Leistung versorgt werden und über den hydro-mechanischen Zweig 11 über die zweite hydrostatische Einheit 13 das eine Fahrwerksrad 4 am Differentialgetriebe 5 vorbei und über die dritte hydrostatische Einheit 14 das gegenüberliegende Fahrwerksrad 4 am Differentialgetriebe 5 vorbei angetrieben werden. Der mechanische Zweig 10 führt in diesem ersten Betriebsbereich I vom Hauptantrieb 2 über ein Zwischengetriebe 30 zur Planetengetriebeanordnung 16, hier und vorzugsweise zum ersten Sonnenrad 18 der Planetengetrieberadanordnung 16. Von einem Ausgang der Planetengetriebeanordnung 16, hier und vorzugsweise dem Planetenradträger 19, führt der mechanische Zweig 10 weiter zum Differentialgetriebe 5 der Fahrwerksräder 4.

Der hydro-mechanische Zweig 10 des Antriebsstrangs 9 führt in dem ersten Betriebsbereich I hier und vorzugsweise ebenfalls vom Hauptantrieb 2 zur Planetengetriebeanordnung 16. Dies erfolgt hier und vorzugsweise auf demselben Weg wie bei dem mechanischen Zweig 10. Von der Planetengetriebeanordnung 16 werden der mechanische Zweig 10 und der hydro-mechanische Zweig 11 verzweigt. Der hydro-mechanische Zweig 11 führt weiter zur hydrostatischen Anordnung 12, insbesondere der ersten hydrostatischen Einheit 12a, hier und vorzugsweise über das Hohlrad 22. Im ersten Betriebsbereich I ist somit eine abtriebsseitige Verzweigung über die Planetengetriebeanordnung 16 realisiert. In oder nach der hydrostatischen Anordnung 12 wird hier und vorzugsweise der hydro-mechanischen Zweig 11 zur zweiten hydrostatischen Einheit 13 und zur dritten hydrostatischen Einheit 14 verzweigt.

Von der ersten hydrostatischen Einheit 13 wird das eine Fahrwerksrad 4 am Differentialgetriebe 5 vorbei angetrieben. Von der zweiten hydrostatischen Einheit 14 wird das gegenüberliegende Fahrwerksrad 4 am Differentialgetriebe 5 vorbei angetrieben. Zwischen der zweiten hydrostatischen Einheit 13 bzw. der dritten hydrostatischen Einheit 14 und dem jeweils angetriebenen Fahrwerksrad 4 kann jeweils noch eine Getriebestufe vorgesehen sein.

Durch das Verschwenken der als Axialkolbenmaschine ausgebildeten ersten hydrostatischen Einheit 12 beim Anfahren aus einer Nullgrad-Stellung heraus in eine erste Verschwenkrichtung und das, insbesondere anschließende, Verschwenken der zweiten und/oder dritten, ebenfalls als Axialkolbenmaschinen ausgebildeten, hydrostatischen Einheiten, aus einer verschwenkten Stellung hin zu einer Nullgrad-Stellung, kann die Übersetzung des Antriebsstrangs 9 kontinuierlich verstellt werden. Dabei nimmt, wie schematisch in der Fig. 3a gezeigt, die im hydro-mechanischen Zweig 11 übertragene Leistung bei ansteigender Geschwindigkeit gegenüber der Gesamtleistung, insbesondere kontinuierlich, ab. Die im mechanischen Zweig 10 übertragene Leistung nimmt, insbesondere kontinuierlich, zu.

Auf diese Weise stellen in einem ersten Betriebsbereich I des Fahrzeugs 1 der mechanische Zweig 10 und der hydro-mechanische Zweig 11 gemeinsam ein stufenlos verstellbares Getriebe bereit. Der erste Betriebsbereich I bildet insofern gewissermaßen einen ersten Gang des Antriebsstrangs 9.

Hier und vorzugsweise, insbesondere im ersten Betriebsbereich I, wird zur Geradeausfahrt die von der hydrostatischen Anordnung 12, insbesondere hydrostatischen Einheit 12a, bereitgestellte Leistung gleichmäßig zwischen der zweiten hydrostatischen Einheit 13 und der dritten hydrostatischen Einheit 14 aufgeteilt. Hier und vorzugsweise ist bei der Geradeausfahrt der Schwenkwinkel im Betrag zwischen der zweiten hydrostatischen Einheit 13 und der zweiten hydrostatischen Einheit 14 im Wesentlichen gleich.

Zur Steuerung des Fahrzeugs 1 wird hier und vorzugsweise zumindest im ersten Betriebsbereich I in Abhängigkeit von einer einzustellenden Fahrtrichtung F das Verhältnis der Leistungsversorgung zwischen der zweiten hydrostatischen Einheit 13 und der dritten hydrostatischen Einheit14 gesteuert. Durch die stärkere Leistungsversorgung eines der beiden Fahrwerksräder 4 kann eine Kurvenfahrt des Fahrzeugs 1 bewirkt und/oder unterstützt werden. Hier und vorzugsweise wird das Verhältnis der Leistungsversorgung zwischen der zweiten und der dritten hydrostatischen Einheit13, 14 während einer Kurvenfahrt in Abhängigkeit von einem Verstellwinkel des Lenkrades 8 und/oder einem Einschlagwinkel der Räder 6 einer gelenkten Achse und ggf. zusätzlich der Fahrzeuggeschwindigkeit v eingestellt. Dies erfolgt hier und vorzugsweise durch eine Steuerung S.

Die unterschiedliche Leistungsversorgung der zweiten hydrostatischen Einheit13 bzw. der dritten hydrostatischen Einheit14 kann durch ein unterschiedlich starkes Verschwenken derselben ganz besonders einfach eingestellt werden.

In der Fig. 3 ist für verschiedene Betriebsbereiche des Fahrzeugs 1 das Verhältnis der im hydro-mechanischen Zweig auf die Fahrwerksräder 4 übertragenen Leistung P_{HY} zu der gesamten auf die Fahrwerksräder 4 übertragenen Leistung P_{G} in Abhängigkeit von der Fahrzeuggeschwindigkeit v gezeigt.

In der Fig. 3a sind auch die Betriebsbereiche gezeigt, in denen die Leistung vom Hauptantrieb 2 zu den Fahrwerksrädern 4 über einen mechanischen Zweig 10 und einen hydromechanischen Zweig 11 übertragen werden. Wie die Fig. 3a weiter zeigt, kann das Fahrzeug 1 einen oder mehrere weitere Betriebsbereiche II, III aufweisen, welche, insbesondere bezogen auf die Fahrzeuggeschwindigkeit v, oberhalb des ersten Betriebsbereichs I angeordnet sind.

In der Fig. 3b ist ein rein hydro-mechanischer Betriebsbereich IV gezeigt, in dem ein rein mechanischer Zweig an der Leistungsübertragung vom Hauptantrieb 2 zu den Fahrwerksrädern 4 nicht beteiligt ist.

Der erste Betriebsbereich I reicht vom Anfahren bis zu einem weiteren, insbesondere einem zweiten, Betriebsbereich für höhere Geschwindigkeiten.

In dem weiteren Betriebsbereich II, III bzw. den weiteren Betriebsbereichen II, III wird bzw. werden hier und vorzugsweise über den bzw. einen weiteren mechanischen Zweig 10 über das Differentialgetriebe 5 die gegenüberliegenden Fahrwerksräder 4 angetrieben und über einen weiteren hydro-mechanischen Zweig von einer der hydrostatischen Einheiten 12a, 13, 14 die gegenüberliegenden Fahrwerksräder 4 über das Differentialgetriebe 5 angetrieben. Dieser weitere Betriebsbereich kann ein zweiter Betriebsbereich II und/oder ein dritter Betriebsbereich III sein.

Im vorliegenden Ausführungsbeispiel ist dieser weitere Betriebsbereich der zweite Betriebsbereich II. Der zweite Betriebsbereich II schließt sich oberhalb an den ersten Betriebsbereich I an. Der dritte Betriebsbereich III schließt sich, sofern vorhanden, oberhalb des zweiten Betriebsbereichs II an, wie dies auch der Fig. 3a entnommen werden kann. Hier und vorzugsweise stellen der hydro-mechanische Zweig des zweiten bzw. dritten Betriebsbereichs II, III und der mechanische Zweig 10 auch in dem zweiten und/oder dem dritten Betriebsbereich II, III jeweils ein stufenlos verstellbares Getriebe bereit.

Auf diese Art ergibt sich hier und vorzugsweise insbesondere über den gesamten Betriebsbereich des Fahrzeugs 1, in dem Leistung über einen hydromechanischen Zweig und einen mechanischen Zweig 10 übertragen wird, ein stufenloses Getriebe, welches durch die jeweiligen mechanischen bzw. hydromechanischen Zweige des Antriebsstrangs 9 bereitgestellt wird.

Hier ist anzumerken, dass das Antreiben der beiden gegenüberliegenden Fahrwerksräder 4 im hydro-mechanischen Zweig mittels der zweiten bzw. dritten hydrostatischen Einheit 13, 14 jeweils am Differentialgetriebe 5 vorbei nur im ersten Betriebsbereich I oder nur im ersten und/oder zweiten Betriebsbereich I, II erfolgt. Dies erfolgt hier, bei einer Leistungsübertragung über sowohl einen mechanischen wie auch einen hydro-mechanischen Antriebszweig, wobei der mechanische Antriebszweig über das Differenzialgetriebe 5 verläuft.

Im zweiten Betriebsbereich II, welcher vorzugsweise einem zweiten Gang entspricht, sind hier und vorzugsweise die Kupplungen 24, 25, 27, 28, 29 sowie die Drehrichtungsänderungsvorrichtung 26 wie folgt geschaltet. Die Kupplung 24 zwischen dem Hohlrad 22 und der ersten hydrostatischen Einheit 12a ist geschlossen. Die Kupplung 25, mittels welcher die Hydraulikpumpe 12 mit dem Hauptantrieb 2 an der Planetengetriebeanordnung 16 vorbei koppelbar ist, ist geöffnet, so dass hier keine Leistungsübertragung möglich ist. Die Kupplungen 27, 28, welche die zweite hydrostatische Einheit 13 mit einem der Fahrwerksräder 4 und die zweite hydrostatische Einheit 14 mit dem gegenüberliegenden Fahrwerksrad 4 koppeln, sind geöffnet. Hier findet keine Leistungsübertragung statt. Die Kupplung 29, über welche die zweite hydrostatische Einheit 13 mit dem zweiten Sonnenrad 23 koppelbar ist, ist geschlossen. Die Drehrichtungsänderungsvorrichtung 26 überträgt die Drehung des Hauptantriebs 2 in eine erste Drehrichtung.

Im zweiten Betriebsbereich II arbeitet hier und vorzugsweise die zweite hydrostatische Einheit 13 als Pumpe und/oder die erste hydrostatische Einheit 12a als Motor. In diesem Fall versorgt die zweite hydrostatische Einheit 13 die erste hydrostatische Einheit 12a mit Leistung. Alternativ kann im zweiten Betriebsbereich II die zweite hydrostatische Einheit 13 als Motor und/oder die erste hydrostatische Einheit 12a als Pumpe arbeiten. In diesem Fall versorgt die erste hydrostatische Einheit 13 die zweite hydrostatische Einheit 12a mit Leistung.

Der zweite Betriebsbereich unterscheidet sich insofern vom ersten Betriebsbereich I, als dass die Leistungsübertragung auf die Fahrwerksräder 4 im weiteren hydro-mechanischen Zweig nicht mehr über die zweite und dritte hydrostatische Einheit 13, 14 am Differenzialgetriebe 5 vorbei, sondern über die erste und/oder zweite hydrostatische Einheit 12,13 über das Differenzialgetriebe 5 erfolgt.

Im zweiten Betriebsbereich II erfolgt die Verzweigung und das Zusammenführen des mechanischen Zweigs 10 und des weiteren hydro-mechanischen Zweigs in der Planetengetriebeanordnung 16. Es ergibt sich eine Compoundkopplung.

Im dritten Betriebsbereich III, welcher vorzugsweise einem dritten Gang entspricht, sind hier und vorzugsweise die Kupplungen 24, 25, 27, 28, 29 sowie die Drehrichtungsänderungsvorrichtung 26 wie folgt geschaltet. Die Kupplung 24 zwischen dem Hohlrad 22 und der ersten hydrostatischen Einheit 12a ist offen. Die Kupplung 25, mittels welcher die erste hydrostatische Einheit 12 mit dem Hauptantrieb 2 an der Planetengetriebeanordnung 16 vorbei koppelbar ist, ist geschlossen. Die Kupplungen 27, 28, welche die zweite hydrostatische Einheit 13 mit einem der Fahrwerksräder 4 und die dritte hydrostatische Einheit 14 mit dem gegenüberliegenden Fahrwerksrad 4 koppeln, sind geöffnet. Hier findet keine Leistungsübertragung statt. Die Kupplung 29, über welche die zweite hydrostatische Einheit 13 mit dem zweiten Sonnenrad 23 koppelbar ist, ist geschlossen. Die Drehrichtungsänderungsvorrichtung 26 überträgt die Drehung des Hauptantriebs 2 in eine erste Drehrichtung.

Der dritte Betriebsbereich III unterscheidet sich insofern vom zweiten Betriebsbereich II, als dass die Leistungsübertragung vom Hauptantrieb 2 auf die erste hydrostatische Einheit 12a nicht über die Planetengetriebeanordnung 16, sondern an der Planetengetriebeanordnung 16 vorbei erfolgt. Hier und vorzugsweise arbeitet die erste hydrostatische Einheit 12a als Pumpe und/oder die zweite hydrostatische Einheit 13 als Motor.

Im dritten Betriebsbereich III erfolgt die Verzweigung hier und vorzugsweise in der Drehrichtungsänderungsvorrichtung 26 und das Zusammenführen des mechanischen Zweigs 10 und des hydro-mechanischen Zweigs 11 in der Planetengetriebeanordnung 16. Es ergibt sich eine antriebsseitige Verzweigung.

In einem ggf. vorhandenen weiteren hydro-mechanischen Betriebsbereich des Fahrzeugs 1, in welchem die Leistung ausschließlich über einen oder mehrere hydro-mechanische Zweige zu den Fahrwerksrädern 4 übertragen wird, können die Fahrwerksräder 4 von der zweiten hydrostatischen Einheit 13 bzw. von der dritten hydrostatischen Einheit 14 auch am Differentialgetriebe 5 vorbei angetrieben werden. Hier und vorzugsweise arbeitet die erste hydrostatische Einheit 12a und ggf. die weitere hydrostatische Einheit als Pumpe und die zweite hydrostatische Einheit 13 und/oder die dritte hydrostatische Einheit 14 als Motor.

In diesem hydro-mechanischen Betriebsbereich IV des Fahrzeugs 1 werden die gegenüberliegenden Fahrwerksräder 4 ausschließlich über einen hydromechanischen Zweig über die zweite und/oder dritte hydrostatische Einheit 13, 14 jeweils am Differentialgetriebe 5 vorbei angetrieben.

In diesem hydro-mechanischen Betriebsbereich IV sind hier und vorzugsweise die Kupplungen 24, 25, 27, 28, 29 sowie die Drehrichtungsänderungsvorrichtung 26 wie folgt geschaltet. Die Kupplung 25, mittels welcher die erste hydrostatische Einheit 12a mit dem Hauptantrieb 2 an der Planetengetriebeanordnung 16 vorbei koppelbar ist, ist geschlossen. Die Kupplungen 27, 28, welche die zweite hydrostatische Einheit 13 mit einem der Fahrwerksräder 4 und die dritte hydrostatische Einheit 14 mit dem gegenüberliegenden Fahrwerksrad 4 koppeln, sind geschlossen. Die Kupplung 24 zwischen dem Hohlrad 22 und der ersten hydrostatischen Einheit 12a ist vorzugsweise geöffnet. Ebenso ist die Kupplung 29, über welche die zweite hydrostatische Einheit 13 mit dem zweiten Sonnenrad 23 koppelbar ist, vorzugsweise geöffnet. Die Drehrichtungsänderungsvorrichtung 26 überträgt die Drehung des Hauptantriebs 2 hier vorzugsweise in einer ersten oder in einer zweiten Drehrichtung.

Der hydro-mechanische Betriebsbereich IV des Fahrzeugs 1 kann einen Rückwärtsbetriebsbereich IVₐ und/oder einen Vorwärtsbetriebsbereich IV_{b} und/oder einen Wendebetriebsbereich aufweisen. Die Drehrichtung der Fahrwerksräder 4 in den Rückwärtsbetriebsbereich IVₐ ist hier und vorzugsweise entgegengesetzt der Drehrichtung der Fahrwerksräder 4 im ersten und/oder im zweiten und/oder im dritten Betriebsbereich I, II, III gerichtet. In dem Vorwärtsbetriebsbereich IV_{b} ist die Drehrichtung der Fahrwerksräder 4 in die gleiche Drehrichtung gerichtet, wie die Drehrichtung der Fahrwerksräder 4 im ersten und/oder im zweiten und/oder im dritten Betriebsbereich I, II, III gerichtet ist. In dem Wendebetriebsbereich ist hier und vorzugsweise die Drehrichtung der gegenüberliegenden Fahrwerksräder 4 entgegengesetzt zueinander gerichtet. In dem Wendebetriebsbereich kann eine ganz besonders große Wendigkeit, ggf. sogar auf der Stelle, erreicht werden. Die Drehrichtung, in welcher die Fahrwerksräder 4 angetrieben werden, wird hier und vorzugsweise über die Verschwenkrichtung der ersten hydrostatischen Einheit 12a, ggf. der weiteren hydrostatischen Einheit, und/oder der zweiten hydrostatischen Einheit 13 und/oder der dritten hydrostatischen Einheit 14 aus der 0°-Stellung heraus eingestellt.

### Bezugszeichenliste

- 1: Fahrzeug
- 2: Hauptantrieb
- 3: Fahrwerk
- 4: Fahrwerksräder
- 5: Differenzialgetriebe
- 6: Räder
- 6a: Reifen
- 6b: weiteres Differenzialgetriebe
- 7: Lenkeinrichtung
- 8: Lenkrad
- 9: Antriebsstrang
- 10: mechanischer Zweig
- 11: hydro-mechanischer Zweig
- 12: hydrostatische Anordnung
- 12a: erste hydrostatische Einheit
- 13: zweite hydrostatische Einheit
- 14: dritte hydrostatische Einheit
- 15: Hinterachse
- 16: Planetenradgetriebeanordnung
- 17: Planetenradgetriebe
- 18: erstes Sonnenrad
- 19: Planetenrad
- 20: Planetenradträger
- 21: weiteres Planetenrad
- 22: Hohlrad
- 23: zweites Sonnenrad
- 24: Kupplung
- 25: Kupplung
- 26: Drehrichtungsänderungsvorrichtung
- 27: Kupplung
- 28: Kupplung
- 29: Kupplung
- 30: Zwischengetriebe
- L: Längsachse
- v: Fahrzeuggeschwindigkeit
- P_{HY}: im hydro-mechansichen Zweig auf die Fahrwerksräder übertragene Leistung
- P_{G}: gesamte auf die Fahrwerksräder übertragene Leistung

## Patentansprüche

1. Fahrzeug, insbesondere landwirtschaftliches Fahrzeug, mit einem Hauptantrieb (2) und mit einem Fahrwerk (3), welches bezogen auf die Fahrzeuglängsachse (L) mindestens zwei gegenüberliegende Fahrwerksräder (4) aufweist, welche über ein Differentialgetriebe (5) miteinander verbunden sind, wobei die Fahrwerksräder (4) vom Hauptantrieb (2) über einen verzweigten Antriebsstrang (9) mit einem mechanischen Zweig (10) und mit einem hydro-mechanischen Zweig (11) antreibbar sind, wobei die gegenüberliegenden Fahrwerksräder (4) über den mechanischen Zweig (10) über das Differentialgetriebe antreibbar sind, wobei der hydro-mechanische Zweig (11) eine hydrostatische Anordnung (12) mit einer ersten hydrostatischen Einheit (12a) aufweist, wobei mit der hydrostatischen Anordnung (12) eine zweite hydrostatische Einheit (13) und eine dritte hydrostatische Einheit (14) des hydro-mechanischen Zweigs (11) mit Leistung versorgbar ist, wobei mittels der zweiten hydrostatischen Einheit (13) eines der Fahrwerksräder (4) am Differentialgetriebe (5) vorbei antreibbar ist und wobei mittels der dritten hydrostatischen Einheit (14) das gegenüberliegende Fahrwerksrad (4) am Differentialgetriebe (5) vorbei antreibbar ist, **dadurch gekennzeichnet, dass** das Fahrzeug in einem ersten Betriebsbereich (I) betreibbar ist und in dem ersten Betriebsbereich (I) des Fahrzeugs (1) der mechanische Zweig (10) des Antriebsstrangs (9) und der hydro-mechanische Zweig (11) des Antriebsstrangs (9) gemeinsam ein stufenlos verstellbares Getriebe bereitstellen, wobei der Antriebsstrang (9) eine Planetengetriebeanordnung (16) aufweist, in welcher in mindestens einem Betriebsbereich der mechanische Zweig (10) und ein hydro-mechanischer Zweig (11) verzweigt werden.

2. Fahrzeug nach Anspruch 1, **dadurch gekennzeichnet, dass** die erste hydrostatische Einheit (12a) eine Axialkolbenmaschine ist, und/oder, dass die zweite hydrostatische Einheit (13) eine Axialkolbenmaschine ist, und/oder, dass die dritte hydrostatische Einheit (14) eine Axialkolbenmaschine ist.

3. Fahrzeug nach Anspruch 1 oder 2, **dadurch gekennzeichnet, dass** die gegenüberliegenden, von der zweiten und dritten hydrostatischen Einheit (13, 14) am Differentialgetriebe (5) vorbei antreibbaren Fahrwerksräder (4) Fahrwerksräder (4) einer hinteren Achse (15) des Fahrzeugs (2) sind.

4. Fahrzeug nach einem der vorhergehenden Ansprüche, **dadurch gekennzeichnet, dass** in dem ersten Betriebsbereich (I) die gegenüberliegenden Fahrwerksräder (4) über den mechanischen Zweig (10) über das Differentialgetriebe (5) angetrieben werden, wobei zusätzlich mit der hydrostatischen Anordnung (12) die zweite hydrostatische Einheit (13) und die dritte hydrostatische Einheit (14) des hydro-mechanischen Zweigs (11) mit Leistung versorgt wird und über den hydromechanischen Zweig (11) über die zweite hydrostatische Einheit (13) das eine Fahrwerksrad (4) am Differentialgetriebe (5) vorbei und über die dritte hydrostatische Einheit (14) das gegenüberliegende Fahrwerksrad (4) am Differentialgetriebe (5) vorbei angetrieben wird.

5. Fahrzeug nach einem der vorhergehenden Ansprüche, **dadurch gekennzeichnet, dass** in dem ersten Betriebsbereich zur Geradeausfahrt die von der hydrostatischen Anordnung (12) bereitgestellte Leistung gleichmäßig zwischen der zweiten und der dritten hydrostatischen Einheit (13, 14) aufgeteilt wird.

6. Fahrzeug nach einem der vorhergehenden Ansprüche, **dadurch gekennzeichnet, dass** im ersten Betriebsbereich (I) in Abhängigkeit von einer einzustellenden bzw. eingestellten Fahrtrichtung das Verhältnis der Leistungsversorgung zwischen der zweiten und der dritten hydrostatischen Einheit (13, 14) gesteuert wird.

7. Fahrzeug nach einem der vorhergehenden Ansprüche, **dadurch gekennzeichnet, dass** in einem weiteren Betriebsbereich, welcher oberhalb des ersten Betriebsbereichs (I) angeordnet ist, über den bzw. einen weiteren mechanischen Zweig (10) über das Differentialgetriebe (5) die gegenüberliegenden Fahrwerksräder (4) angetrieben werden und dass über einen weiteren hydro-mechanischen Zweig die gegenüberliegenden Fahrwerksräder (4) über das Differentialgetriebe (5) angetrieben werden.

8. Fahrzeug nach Anspruch 7, **dadurch gekennzeichnet, dass** der weitere Betriebsbereich ein zweiter und/oder ein dritter Betriebsbereich (II, III) ist, wobei sich der zweite Betriebsbereich (II) oberhalb an den ersten Betriebsbereich (I) anschließt und wobei sich der dritte Betriebsbereich (III) oberhalb an den zweiten Betriebsbereich (II) anschließt.

9. Fahrzeug nach Anspruch 8, **dadurch gekennzeichnet, dass** in dem zweiten Betriebsbereich (II) und/oder dem dritten Betriebsbereich (III) des Fahrzeugs (1) der mechanische Zweig (10) des Antriebsstrangs (9) und der weitere hydro-mechanische Zweig des Antriebsstrangs (9) gemeinsam ein stufenlos verstellbares Getriebe bereitstellen.

10. Fahrzeug nach einem der vorhergehenden Ansprüche, **dadurch gekennzeichnet, dass** in einem hydro-mechanischen Betriebsbereich (IV) des Fahrzeugs (1) die gegenüberliegenden Fahrwerksräder (4) ausschließlich über einen hydro-mechanischen Zweig über die zweite und die dritte hydrostatische Einheit (13, 14) jeweils am Differentialgetriebe (5) vorbei angetrieben werden.

11. Fahrzeug nach Anspruch 10, **dadurch gekennzeichnet, dass** der hydro-mechanische Betriebsbereich (IV) des Fahrzeugs einen Rückwärts-Betriebsbereich (IVₐ) und/oder einen Vorwärts-Betriebsbereich (IV_{b}) und/oder einen Wende-Betriebsbereich aufweist, wobei die Drehrichtung der Fahrwerksräder (4) in dem Rückwärts-Betriebsbereich (IVₐ) entgegengesetzt der Drehrichtung im ersten und/oder zweiten und/oder dritten Betriebsbereich (I, II, III) gerichtet ist, wobei die Drehrichtung der Fahrwerksräder (4) in dem Vorwärts-Betriebsbereich (IV_{b}) gleich der Drehrichtung im ersten und/oder zweiten und/oder dritten Betriebsbereich (I, II, III) gerichtet ist, und wobei die Drehrichtung der gegenüberliegenden Fahrwerksräder (4) in dem Wende-Betriebsbereich entgegengesetzt zueinander gerichtet ist.

12. Fahrzeug nach einem der vorhergehenden Ansprüche, **dadurch gekennzeichnet, dass** im zweiten und/oder dritten Betriebsbereich (II, III) der mechanische Zweig (10) und ein hydro-mechanischer Zweig (11) in der Planetengetriebeanordnung (16) zusammengeführt werden.

13. Fahrzeug nach einem der vorhergehenden Ansprüche, **dadurch gekennzeichnet, dass** der Antriebsstrang (9) eine Drehrichtungsänderungsvorrichtung (26) aufweist, mittels welcher bei einer unveränderten Eingangsdrehrichtung des Hauptantriebs je nach Zustand der Drehrichtungsänderungsvorrichtung (26) an deren Ausgang bzw. deren Ausgängen an eine der hydrostatischen Einheiten (12a, 13, 14) und/oder das Planetengetriebe (16) eine erste Drehrichtung oder eine zweite, der ersten Drehrichtung entgegengesetzte Drehrichtung, ausgegeben werden kann.

## Claims

1. A vehicle, in particular an agricultural vehicle, with a main drive (2) and with a chassis (3) which has at least two chassis wheels (4) which are opposite each other with respect to the longitudinal axis **(L)** of the vehicle and which are connected together through a differential gear (5), wherein the chassis wheels (4) can be driven from the main drive (2) through a branched drive train (9) with a mechanical branch (10) and with a hydro-mechanical branch (11), wherein the opposing chassis wheels (4) can be driven through the mechanical branch (10) through the differential gear, wherein the hydro-mechanical branch (11) has a hydrostatic assembly (12) with a first hydrostatic unit (12a), wherein with the hydrostatic assembly (12), a second hydrostatic unit (13) and a third hydrostatic unit (14) of the hydro-mechanical branch (11) can be supplied with power,
wherein
by means of the second hydrostatic unit (13), one of the chassis wheels (4) can be driven by missing out the differential gear (5), and
by means of the third hydrostatic unit (14), the opposing chassis wheel (4) can be driven by missing out the differential gear (5),
**characterized in that**
the vehicle can be operated in a first operational range **(I)** and in the first operational range **(I)** of the vehicle (1), the mechanical branch (10) of the drive train (9) and the hydro-mechanical branch (11) of the drive train (9) together provide a continuously variable transmission, wherein the drive train (9) has a planetary gear assembly (16) in which in at least one operational range the mechanical branch (10) and a hydro-mechanical branch (11) are branched.

2. The vehicle according to claim 1, **characterized in that** the first hydrostatic unit (12a) is an axial piston machine, and/or **in that** the second hydrostatic unit (13) is an axial piston machine, and/or **in that** the third hydrostatic unit (14) is an axial piston machine.

3. The vehicle according to claim 1 or claim 2, **characterized in that** the opposing chassis wheels (4) which can be driven by the second and third hydrostatic units (13, 14) by missing out the differential gear (5) are chassis wheels (4) of a rear axle (15) of the vehicle (2).

4. The vehicle according to one of the preceding claims, **characterized in that** in the first operational range **(I),** the opposing chassis wheels (4) are driven through the mechanical branch (10) through the differential gear (5), wherein in addition to the hydrostatic assembly (12), the second hydrostatic unit (13) and the third hydrostatic unit (14) of the hydro-mechanical branch (11) are supplied with power and the drive to one chassis wheel (4) through the hydro-mechanical branch (11) through the second hydrostatic unit (13) misses out the differential gear (5) and the drive to the opposing chassis wheel (4) through the third hydrostatic unit (14) misses out the differential gear (5).

5. The vehicle according to one of the preceding claims, **characterized in that** in the first operational range for travel in a straight line, the power supplied by the hydrostatic assembly (12) is evenly divided between the second and the third hydrostatic units (13, 14).

6. The vehicle according to one of the preceding claims, **characterized in that** in the first operational range **(I),** the ratio of the power supply between the second and the third hydrostatic units (13, 14) is controlled as a function of a direction of travel to be set or which has been set.

7. The vehicle according to one of the preceding claims, **characterized in that** in a further operational range which is disposed higher than the first operational range **(I),** the opposing chassis wheels (4) are driven through the or a further mechanical branch (10) through the differential gear (5) and **in that** the opposing chassis wheels (4) are driven through the differential gear (5) through a further hydro-mechanical branch.

8. The vehicle according to claim 7, **characterized in that** the further operational range is a second and/or a third operational range (11, **III),** wherein the second operational range (**II**) is adjacent to and higher than the first operational range **(1)** and wherein the third operational range **(III)** is adjacent to and higher than the second operational range **(II).**

9. The vehicle according to claim 8, **characterized in that** in the second operational range (II) and/or in the third operational range (**III**) of the vehicle (1). the mechanical branch (10) of the drive train (9) and the further hydro-mechanical branch of the drive train (9) together provide a continuously variable transmission.

10. The vehicle according to one of the preceding claims, **characterized in that** in a hydro-mechanical operational range **(IV)** of the vehicle (1), the opposing chassis wheels (4) are driven exclusively through a hydro-mechanical branch through the second and the third hydrostatic units (13, 14), respectively missing out the differential gear (5).

11. The vehicle according to claim 10, **characterized in that** the hydro-mechanical operational range **(IV)** of the vehicle has a reverse operational range **(IVₐ)** and/or a forwards operational range **(IV_{b})** and/or a turning operational range, wherein the direction of rotation of the chassis wheels (4) in the reverse operational range **(IVₐ)** is opposite to the direction of rotation in the first and/or second and/or third operational range (**I**, **II**, **III**), wherein the direction of rotation of the chassis wheels (4) in the forwards operational range **(IV_{b})** is the same as the direction of rotation in the first and/or second and/or third operational range **(I, II, III),** and
wherein the direction of rotation of the opposed chassis wheels (4) in the turning operational range is in opposite directions to each other.

12. The vehicle according to one of the preceding claims, **characterized in that** in the second and/or third operational range (**II**, **III**), the mechanical branch (10) and a hydro-mechanical branch (11) are merged in the planetary gear assembly (16).

13. The vehicle according to one of the preceding claims, **characterized in that** the drive train (9) has a device (26) for changing the direction of rotation by means of which, in the case of an unchanged input direction of rotation of the main drive and depending on the state of the direction of rotation changing device (16), a first direction of rotation or a second direction of rotation which is opposite to the first direction of rotation can be output at its output or its outputs to one of the hydrostatic units (12a, 13, 14) and/or to the planetary gear (16).

## Revendications

1. Véhicule, en particulier véhicule agricole, comprenant un moyen d'entraînement principal (2) et comprenant un train de roulement (3) qui, par rapport à l'axe longitudinal de véhicule (L), comporte au moins deux roues de train de roulement en vis-à-vis (4) qui sont reliées entre elles par l'intermédiaire d'un engrenage différentiel (5), les roues de train de roulement (4) étant entraînables par le moyen d'entraînement principal (2) par l'intermédiaire d'une chaîne de transmission à répartition de puissance (9) avec une branche mécanique (10) et avec une branche hydromécanique (11), les roues de train de roulement en vis-à-vis (4) étant entraînables par l'intermédiaire de la branche mécanique (10) par l'intermédiaire de l'engrenage différentiel, la branche hydromécanique (11) comportant un agencement hydrostatique (12) avec une première unité hydrostatique (12a), avec l'agencement hydrostatique (12) étant alimentables en puissance une deuxième unité hydrostatique (13) et une troisième unité hydrostatique (14) de la branche hydromécanique (11), une des roues de train de roulement (4) étant entraînable au moyen de la deuxième unité hydrostatique (13) en longeant l'engrenage différentiel (5), la roue de train de roulement en vis-à-vis (4) étant entraînable au moyen de la troisième unité hydrostatique (14) en longeant l'engrenage différentiel (5), **caractérisé en ce que** le véhicule est exploitable dans une première plage d'exploitation (I) et, dans la première plage d'exploitation (I) du véhicule (1), la branche mécanique (10) de la chaîne de transmission (9) et la branche hydromécanique (11) de la chaîne de transmission (9) constituent conjointement une transmission à variation continue, la chaîne de transmission (9) comportant un agencement d'engrenage planétaire (16) dans lequel la branche mécanique (10) et une branche hydromécanique (11) sont ramifiées dans au moins une plage d'exploitation.

2. Véhicule selon la revendication 1, **caractérisé en ce que** la première unité hydrostatique (12a) est une machine à piston axial, et/ou **en ce que** la deuxième unité hydrostatique (13) est une machine à piston axial, et/ou **en ce que** la troisième unité hydrostatique (14) est une machine à piston axial.

3. Véhicule selon la revendication 1 ou 2, **caractérisé en ce que** les roues de train de roulement en vis-à-vis (4), entraînables par les deuxième et troisième unités hydrostatiques (13, 14) en longeant l'engrenage différentiel (5), sont des roues de train de roulement (4) d'un essieu arrière (15) du véhicule (2) .

4. Véhicule selon une des revendications précédentes, **caractérisé en ce que**, dans la première plage d'exploitation (I), les roues de train de roulement en vis-à-vis (4) sont entraînées par l'intermédiaire de la branche mécanique (10) par l'intermédiaire de l'engrenage différentiel (5), en plus avec l'agencement hydrostatique (12) la deuxième unité hydrostatique (13) et la troisième unité hydrostatique (14) de la branche hydromécanique (11) sont alimentées en puissance et, par l'intermédiaire de la branche hydromécanique (11), l'une (4) des roues de train de roulement est entraînée par l'intermédiaire de la deuxième unité hydrostatique (13) en longeant l'engrenage différentiel (5) et la roue de train de roulement (4) en vis-à-vis est entraînée par l'intermédiaire de la troisième unité hydrostatique (14) en longeant l'engrenage différentiel (5).

5. Véhicule selon une des revendications précédentes, **caractérisé en ce que**, dans la première plage d'exploitation, pour une marche en ligne droite, la puissance fournie par l'agencement hydrostatique (12) est répartie uniformément entre la deuxième et la troisième unité hydrostatique (13, 14).

6. Véhicule selon une des revendications précédentes, **caractérisé en ce que**, dans la première plage d'exploitation (I), le rapport d'alimentation en puissance entre la deuxième et la troisième unité hydrostatique (13, 14) est commandé en fonction d'un sens de marche à instaurer, respectivement instauré.

7. Véhicule selon une des revendications précédentes, **caractérisé en ce que**, dans une autre plage d'exploitation qui est disposée au-dessus de la première plage d'exploitation (I), les roues de train de roulement en vis-à-vis (4) sont entraînées par l'intermédiaire de la, respectivement d'une autre branche mécanique (10) par l'intermédiaire de l'engrenage différentiel (5), et **en ce que**, par l'intermédiaire d'une autre branche hydromécanique, les roues de train de roulement en vis-à-vis (4) sont entraînées par l'intermédiaire de l'engrenage différentiel (5).

8. Véhicule selon la revendication 7, **caractérisé en ce que** l'autre plage d'exploitation est une deuxième et/ou une troisième plage d'exploitation (II, III), la deuxième plage d'exploitation (II) se raccordant au-dessus à la première plage d'exploitation (I), et la troisième plage d'exploitation (III) se raccordant au-dessus à la deuxième plage d'exploitation (II).

9. Véhicule selon la revendication 8, **caractérisé en ce que**, dans la deuxième plage d'exploitation (II) et/ou dans la troisième plage d'exploitation (III) du véhicule (1), la branche mécanique (10) de la chaîne de transmission (9) et l'autre branche hydromécanique de la chaîne de transmission (9) constituent conjointement une transmission à réglage progressif.

10. Véhicule selon une des revendications précédentes, **caractérisé en ce que** dans une plage d'exploitation hydromécanique (IV) du véhicule (1), les roues de train de roulement en vis-à-vis (4) sont entraînées exclusivement par l'intermédiaire d'une branche hydromécanique par l'intermédiaire de la deuxième et de la troisième unité hydrostatique (13, 14), respectivement en longeant l'engrenage différentiel (5).

11. Véhicule selon la revendication 10, **caractérisé en ce que** la plage d'exploitation hydromécanique (IV) du véhicule comporte une plage d'exploitation de marche arrière (IVₐ) et/ou une plage d'exploitation de marche avant (IV_{b}) et/ou une plage d'exploitation de retournement, le sens de rotation des roues de train de roulement (4) dans la plage d'exploitation de marche arrière (IVₐ) étant orienté à l'opposé du sens de rotation dans la première et/ou la deuxième et/ou la troisième plage d'exploitation (I, II, III), le sens de rotation des roues de train de roulement (4) dans la plage d'exploitation de marche avant (IV_{b}) étant identique au sens de rotation dans la première et/ou la deuxième et/ou la troisième plage d'exploitation (I, II, III), et les sens de rotation des roues de train de roulement en vis-à-vis (4) dans la plage d'exploitation de retournement étant mutuellement opposés.

12. Véhicule selon une des revendications précédentes, **caractérisé en ce que**, dans la seconde et/ou la troisième plage d'exploitation (II, III), la branche mécanique (10) et une branche hydromécanique (11) sont réunies dans l'agencement d'engrenage planétaire (16).

13. Véhicule selon une des revendications précédentes, **caractérisé en ce que** la chaîne de transmission (9) comporte un dispositif de changement de sens de rotation (26) au moyen duquel, en cas de sens de rotation d'entrée inchangé du moyen d'entraînement principal, selon l'état du dispositif de changement de sens de rotation (26) à sa sortie, respectivement à ses sorties, un premier sens de rotation ou un second sens de rotation opposé au premier sens de rotation peut être transmis à une des unités hydrostatiques (12a, 13, 14) et/ou à l'engrenage planétaire (16).
